# FASCICULE DE BREVET EUROPEEN

(11) **EP 1 337 406 B1**
(45) Date de publication et mention de la délivrance du brevet: **11.08.2004**
(21) Numéro de dépôt: 01988657.1
(22) Date de dépôt: 22.10.2001
(51) Int. Cl.: B60C 23/04

(54) **DETECTEUR D'ECLATEMENT DE PNEUMATIQUE**
VORRICHTUNG ZUR ERFASSUNG EINES LUFTLEEREN REIFENS
TYRE BLOW-OUT DETECTOR

(30) Priorité: 23.10.2000 FR 0013772
(43) Date de publication de la demande: 27.08.2003
(73) Titulaire: Société de Technologie Michelin, 63000 Clermont-Ferrand (FR); MICHELIN RECHERCHE ET TECHNIQUE S.A., CH-1463 Granges-Paccot (CH)
(72) Inventeur: BOULOT, Jean-Francis, F-63430 Pont du Château (FR)
(74) Mandataire: Dequire, Philippe
(86) Numéro de dépôt international: PCT/EP2001/012164
(87) Numéro de publication internationale: WO 2002/034551

(56) Documents cités:
- US-A- 5 119 066
- US-A- 5 231 872

## Description

La présente invention concerne un détecteur d'éclatement de pneumatique, permettant d'identifier très rapidement une situation potentiellement dangereuse liée à une perte de pression sensiblement subite et importante telle que dans le cas d'une crevaison ou d'un éclatement de pneumatique.

De plus en plus, les constructeurs automobiles et les fabricants de pneumatiques tentent de prendre en compte les exigences de sécurité, de confort et de commodité sans cesse grandissante des usagers modernes de la route. Ce phénomène se manifeste par exemple par la banalisation de nombreux types de dispositifs pratiquement inexistants il y a à peine quelques années, comme par exemple les coussins de sécurité, les freins de type ABS, les dispositifs ESP, etc.

De tels dispositifs demeurent cependant insuffisants en cas de situation véritablement délicate telle que lors d'une perte de pression sensiblement subite et importante d'un ou plusieurs pneumatiques équipant un véhicule en déplacement. Ce genre de situation peut conduire à une perte de contrôle totale ou partielle du véhicule, pouvant provoquer un accident. Si le véhicule roule alors à haute vitesse, cette situation peut devenir périlleuse et même mettre en danger un ou plusieurs véhicules ainsi que les personnes à leur bord. Il est bien évidemment souhaitable de pouvoir éviter de telles situations ou tout au moins de tenter de minimiser les risques leur sont inhérents.

On connaît par exemple certains types de capteurs de pression, permettant de mesurer la pression d'un pneumatique à un temps donné. En général, de tels capteurs nécessitent une alimentation électrique pour effectuer les mesures et transmettre les informations recueillies. De manière connue, on équipe la roue d'une pile. Si on souhaite effectuer des mesures de pression fréquentes, voire en temps continu, ce qui est indispensable si on souhaite détecter une crevaison de pneumatique, la pile doit alors être facilement remplaçable, puisque le capteur sollicite considérablement la pile, qui se décharge rapidement. Le remplacement doit pouvoir être effectué de façon simple, rapide et peu coûteuse.

Dans un tel contexte, on rencontre régulièrement des problèmes de fiabilité dus aux contacts de la pile qui doivent supporter un environnement des plus sévères. Les contacts se dégradent et l'alimentation en énergie électrique risque de devenir aléatoire ou instable, voire complètement interrompue.

Pour pallier ce type de situation, on utilise des piles non remplaçables, qui peuvent être intégrées de façon définitives au circuit électrique, par exemple par soudage. On obtient alors une plus grande fiabilité au niveau de l'alimentation en énergie. Par contre, si on veut éviter que la durée de vie de la pile soit trop courte, on doit limiter la consommation d'énergie. Cela revient à alimenter les capteurs sur une base non permanente. On peut par exemple effectuer les mesures de pression par échantillons, à des intervalles de temps donnés. Ces intervalles sont le plus espacés possible si on souhaite que la durée de vie de la pile corresponde le plus possible à la durée de vie d'un pneumatique par exemple, voire à la durée de vie du véhicule. Un tel contexte est non convenable si on souhaite utiliser le capteur de pression pour détecter une crevaison ou tout autre type de situation similaire de perte de pression rapide et importante d'un pneumatique. Par échantillonnage, par exemple à toutes les 30 ou 60 secondes, on détectera une éventuelle crevaison uniquement lors de la prochaine itération ou mesure, donc un certain temps après la crevaison. Or, une détection d'éclatement, pour être utile, doit être réalisée dans un très court instant, quasi-instantané. Sinon le conducteur subit les conséquences de la crevaison avant d'en être informé. Ces conséquences servent alors d'avertissement, et il est souvent trop tard pour réagir, en particulier si le véhicule circule à vitesse élevée.

Le document US-A-5 119 066 décrit un détecteur de pression conforme au préambule de la revendication 1.

La présente invention vise à proposer un dispositif de détection de perte de pression sensiblement subite et importante d'un pneumatique permettant de remédier à ces difficultés.

Pour ce faire, l'invention propose un dispositif de détection de perte de pression sensiblement subite et importante d'un pneumatique comprenant :
- un détecteur de variation de pression susceptible d'une part de réagir dans un intervalle de temps de sécurité à une variation sensiblement importante et rapide de la pression à l'intérieur de la cavité du pneumatique, et d'autre part d'interagir sur un autre élément coopérant (électriquement ou mécaniquement) avec ledit détecteur ;
- un module de gestion, coopérant avec ledit détecteur et susceptible sur la base de l'information fournie par ce détecteur, d'envoyer un signal électrique suite à l'atteinte d'un seuil donné de variation de pression.

Un tel dispositif permet une détection sensiblement immédiate ou sensiblement instantanée de toute perte de pression importante et sensiblement subite du pneumatique, comme par exemple dans le cas d'un éclatement du pneumatique. Pour pallier au risque inhérent à ce type de situation, il est impératif d'obtenir l'information dans un délai très court, si possible dans lequel t tends vers 0 s. C'est la seule façon véritablement efficace de permettre une réaction en temps opportun, soit de la part du conducteur, soit d'un dispositif d'assistance à la conduite, ou encore des deux à la fois. Il est ainsi possible de réagir par exemple avant que la perte de pression n'entraîne une perte de contrôle du véhicule. La sécurité des passagers du véhicule en question ainsi que des autres véhicules environnant est donc améliorée, que se soit en cas d'éclatement, ou de tout autre type de perte de pression importante et sensiblement subite d'un ou plusieurs pneumatique d'un véhicule.

De manière avantageuse, le seuil minimum prédéterminé correspond sensiblement à une déformation provoquée par une perte de pression importante et rapide tel que lors d'un éclatement du pneumatique dont on effectue la surveillance. A titre d'exemple non limitatif, les seuils minimum à considérer comme étant des variations de pression importantes sensiblement brutales et subites peuvent être de l'ordre de 0.1 bar/s, et de préférence d'environ 1 ou 2 bars/s. Le temps de réaction est de préférence inférieur à 100 ms.

Le détecteur de variation de pression est avantageusement susceptible d'interagir sur un autre élément coopérant soit électriquement ou mécaniquement avec ledit détecteur.

L'intervalle de temps de sécurité à l'intérieur duquel il est souhaitable que le dispositif réagisse correspond avantageusement à un temps très court, comme par exemple un intervalle dans lequel le temps t tends vers 0 seconde. Plus le temps est court, plus le dispositif peut contribuer à améliorer la sécurité. Lorsque l'intervalle devient trop long pour permettre une réaction susceptible de contribuer à améliorer la sécurité du véhicule et des passagers, alors il ne s'agit plus d'un intervalle de sécurité tel qu'entendu dans la présente invention.

Le signal transmis par le module de gestion est avantageusement de type électrique ou radio.

Selon un exemple de réalisation avantageux, le module de gestion émet un signal (par exemple électrique ou radio ou autre) susceptible d'activer un moyen d'avertissement pour le conducteur du véhicule. Celui-ci peut alors mieux réagir et/ ou anticiper les corrections à apporter afin de maintenir le véhicule dans une trajectoire la plus sûre possible, ou tout au moins, pour augmenter ses chances d'éviter que le véhicule ne quitte la chaussée.

Selon un autre exemple de réalisation avantageux, le module de gestion émet un signal susceptible de servir de paramètre pour un organe d'assistance à la conduite d'un véhicule. Il peut alors s'agir d'un organe d'assistance tel un dispositif de type ESP, un dispositif de type anti-blocage des freins (ABS), un dispositif de type anti-patinage, etc. Ces organes peuvent alors mieux contribuer à assurer et maintenir la sécurité de conduite.

De manière avantageuse, le détecteur de variation de pression est de type piézo-électrique. Il s'agit d'une technologie éprouvée en soit, fiable, précise, permettant des temps de réaction très courts, comme par exemple inférieur à 100 ms. Par ailleurs, une des principales caractéristiques des capteurs de type piézo-électrique consiste à pouvoir fonctionner sans alimentation. Plus particulièrement, une déformation de la membrane constituée d'un matériau de type piézo-électrique permet de générer un micro-courant. Ce courant est ensuite utilisé par un circuit de lecture et de traitement ou d'analyse du signal. Seul le module électronique nécessite une alimentation, mais de très faible puissance. Une pile longue durée peut donc être prévue.

Par exemple, le détecteur de variation de pression comprend un boîtier muni de deux chambres sensiblement isolées l'une de l'autre et séparées par une membrane de type piézo-électrique, une première chambre étant soumise à une pression de référence, la seconde étant susceptible d'être en communication fluidique avec l'ambiance du milieu dans lequel on souhaite effectuer la surveillance, ladite membrane étant déformable sous l'action d'une variation de la pression de ladite ambiance, les déformations ainsi produites permettant de générer un signal électrique dont l'intensité est en relation avec l'importance de la déformation.

La pression de référence de la chambre de référence est sensiblement constante et ne varie pas lors d'une variation de la pression de l'ambiance sous surveillance, ce qui permet au différentiel de pression entre les chambres de varier, cette dernière variation donnant lieu à génération d'un signal de type piézo-électrique.

De manière avantageuse, la membrane est adaptée pour réagir avec une amplitude et/ou une vitesse de déformation en fonction du niveau et/ou du taux de la variation de la pression.

De manière avantageuse, la pression de référence correspond au vide.

Le capteur est avantageusement disposé de façon à ce que l'ambiance du milieu dans lequel on effectue la surveillance corresponde à la pression à l'intérieur de la cavité d'un pneumatique. Par exemple, le capteur peut être disposé directement dans ladite cavité ; autrement, une canalisation peut permettre l'acheminement de l'ambiance jusqu'au capteur disposé par exemple dans la roue.

Selon un exemple de réalisation, la membrane de type piézo-électrique comporte deux faces métallisées.

Selon un autre exemple de réalisation avantageux, le détecteur de variation de pression est de type anéroïde.

il s'agit d'une technologie simple, fiable, peu coûteuse et ne nécessitant pas d'alimentation électrique importante pour fonctionner. Notamment, la capsule anéroïde ne nécessite pas d'alimentation ; seul le module électronique nécessite une telle alimentation, mais de très faible puissance. Une pile longue durée peut donc être prévue.

Ainsi, par exemple, il comporte une capsule anéroïde pourvue d'un orifice calibré en communication fluidique avec l'ambiance du milieu dans lequel on souhaite effectuer la détection, ladite capsule étant déformable sous l'action d'une variation de la pression de ladite ambiance.

De manière avantageuse, il est prévu un organe électronique de mesure ou de détection coopérant avec ladite capsule de façon à ce que les déformations ainsi produites permettent l'activation dudit organe électronique. Il peut s'agir par exemple d'un détecteur de seuil, calibré de façon à transmettre un signal électrique lorsqu'un seuil minimum pré-établi de déformation de la membrane est atteint. Selon un exemple de réalisation, ledit organe électronique est un transducteur permettant de générer un signal électrique dont l'intensité est en relation avec l'importance de la déformation.

Selon un autre exemple de réalisation avantageux, il est prévu un organe mécanique de mesure ou de détection coopérant avec ladite capsule de façon à ce que les déformations ainsi produites permettent l'activation dudit organe mécanique. Il peut s'agir par exemple d'un détecteur de seuil, calibré de façon à actionner un organe susceptible de transmettre un signal électrique lorsqu'un seuil minimum pré-établi de déformation de la membrane est atteint. Selon un exemple de réalisation, ledit organe mécanique coopère avec un rhéostat susceptible de générer un signal électrique dont l'intensité est en relation avec l'importance de la déformation.

De manière avantageuse l'orifice calibré est un tube capillaire. Cela permet, lors d'une variation de la pression surveillée, que la pression à l'intérieur de la capsule anéroïde change sensiblement plus lentement que celle autour de la capsule, créant de ce fait un différentiel de pression susceptible d'entraîner une déformation de la capsule.

Le dispositif selon l'invention est avantageusement prévu pour montage sur une roue ; il est alors avantageux de prévoir au moins un moyen de transmission des données vers une partie non rotative du véhicule, afin d'assurer que les signaux puissent transiter de la roue vers le véhicule. Le véhicule peut disposer d'au moins un moyen de réception des données.

L'invention prévoit également un pneumatique comportant un dispositif de détection d'éclatement tel que décrit ci-dessus.

L'invention prévoit également une jante comportant un dispositif de détection d'éclatement tel que décrit ci-dessus.

L'invention prévoit également une méthode de détection de perte de pression sensiblement subite et importante d'un pneumatique consistant à :
- prévoir un élément (par exemple un détecteur de variation de pression) qui, lors d'une variation sensiblement importante et rapide de la pression à l'intérieur de la cavité du pneumatique, réagit dans un intervalle de temps de sécurité afin de générer un signal de perte de pression.

D'autres caractéristiques et avantages de l'invention apparaîtront à la lecture de la description du dispositif de détection d'éclatement conforme à l'invention, donnée à titre non limitatif, en se référant aux figures en annexe, dans lesquelles:
la figure 1 présente une vue en coupe schématique d'un capteur de variation de pression selon l'invention ;
la figure 2 présente un diagramme illustrant des exemples de signaux associés à certains types de variations de pression susceptibles de se présenter au niveau des pneumatiques d'un véhicule.
la figure 3 présente un organigramme comparatif de la surveillance d'un pneumatique avec d'une part un capteur de pression conventionnel, et d'autre part un détecteur de variation de pression selon l'invention :
les figures 4a et 4b illustrent un schéma fonctionnel d'un dispositif de détection d'éclatement selon l'invention ;
les figures 5a et 5b illustrent un autre type de détecteur de variation de pression comportant une capsule anéroïde ;
la figure 6 illustre un schéma fonctionnel d'un système de mesure et /ou de surveillance de la pression des pneus d'un véhicule, comportant un capteur de pression et un détecteur de variation de pression.

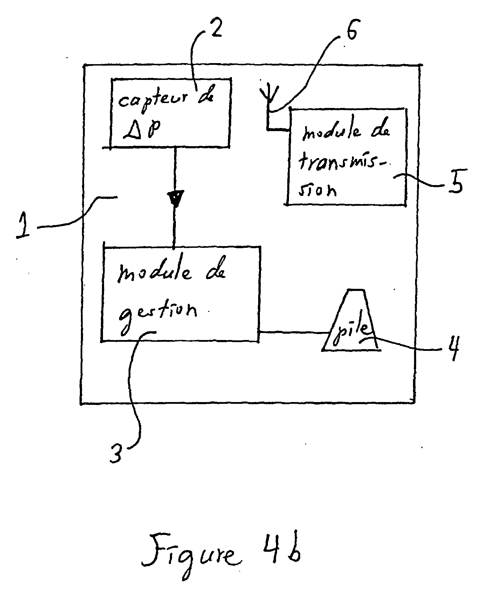

La figure 4b illustre un schéma fonctionnel d'un dispositif de détection 1 d'éclatement selon l'invention. Il comporte un capteur de variation de pression 2, pouvant être de plusieurs types, tel que décrits ci-après. Un module de gestion 3, coopérant électriquement ou mécaniquement avec le capteur 2 est prévu. Une pile 4 permet l'alimentation du module 3, et éventuellement du capteur 2, mais plusieurs types avantageux de capteurs selon l'invention ne nécessitent pas d'alimentation, ce qui permet d'économiser la pile 4. De préférence, afin de permettre la transmission des données depuis la roue 10 du véhicule vers le véhicule, on prévoit avantageusement un module de transmission 5. Il peut s'agir par exemple d'un émetteur (de préférence HF), d'un transpondeur, etc. Une éventuelle antenne 6 complète le dispositif de la figure 4b.

Ce dispositif est prévu pour montage sur une roue, soit sur la jante ou sur le pneumatique. Il peut également être intégré à l'un ou l'autre de ces éléments, comme par exemple moulé dans une parois du pneumatique. Pour cette raison, on utilise de préférence un détecteur de variation de pression 2 ne nécessitant pas d'alimentation, afin de permettre une durée de vie de la pile 4 qui puisse dans la mesure de possible correspondre à celle du pneumatique, de la roue ou du véhicule. La pile 4 est alors intégrée au dispositif 1 ; elle peut par exemple être soudée. De cette façon, on évite les problèmes fréquents de contacts inhérents aux piles remplaçables.

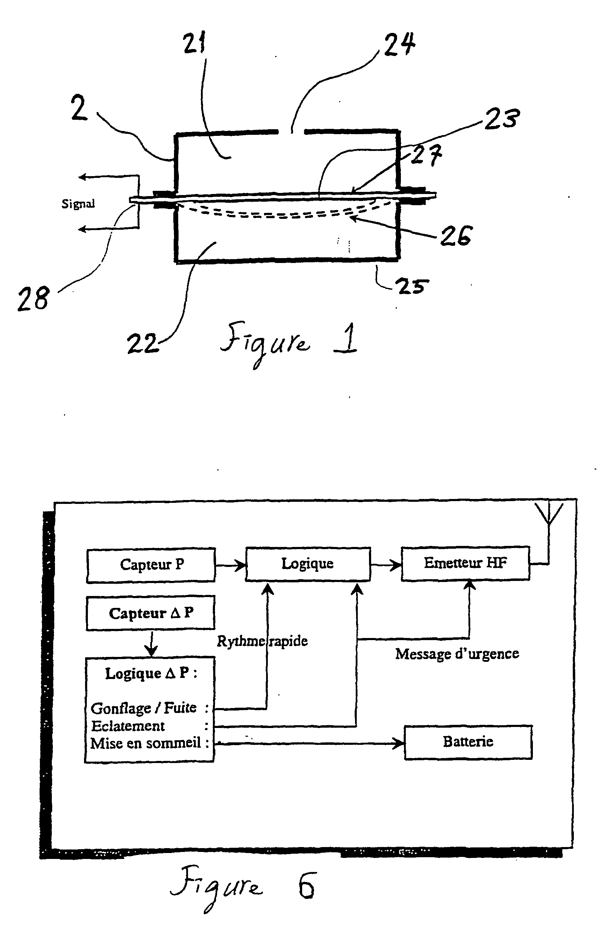

La figure 1 illustre un premier type de détecteur de variation de pression 2, de type piézo-électrique. Il comprend un boîtier 25, pourvu de deux chambres 21 et 22, séparées et sensiblement isolées l'une de l'autre par une membrane 23 de type piézo-électrique. Une ouverture 24 permet d'établir une communication fluidique entre une première chambre 21 du détecteur, et le milieu ou ambiance que l'on souhaite surveiller. La chambre 22 est soumise à une pression de référence, voire sans pression ou sous vide. Une sortie 28 électrique permet de transmettre le signal de faible courant généré pendant toute déformation de la membrane 23.

Dans le cas où la chambre 22 est sous vide, la membrane 23 présente en général une déformation concave; elle est poussée vers la chambre 22 sous vide. Toute pression additionnelle provenant de l'orifice 24 contribue à déformer la membrane 23 qui occupera une position stabilisée comme par exemple 26. Une éventuelle chute de pression dans la chambre témoin 21 entraîne une nouvelle déformation de la membrane 23 qui tend alors à reprendre sa forme ou profil d'origine 27 (sensiblement plat). Lors du changement de courbure de la membrane 23, un faible courant est émis, en fonction de l'amplitude de la déformation et/ ou de la vitesse de déformation. Ainsi, un éclatement du pneumatique relié à la chambre 21 par l'orifice 24 entraîne une chute brutale et importante de la pression dans la chambre 21. La déformation de la membrane 23 d'un premier profil stabilisé vers un second profil stabilisé permet la génération d'un courant par la sortie électrique 28. Ce courant peut par la suite être reçu par un module de gestion 3 et traité de façon appropriée.

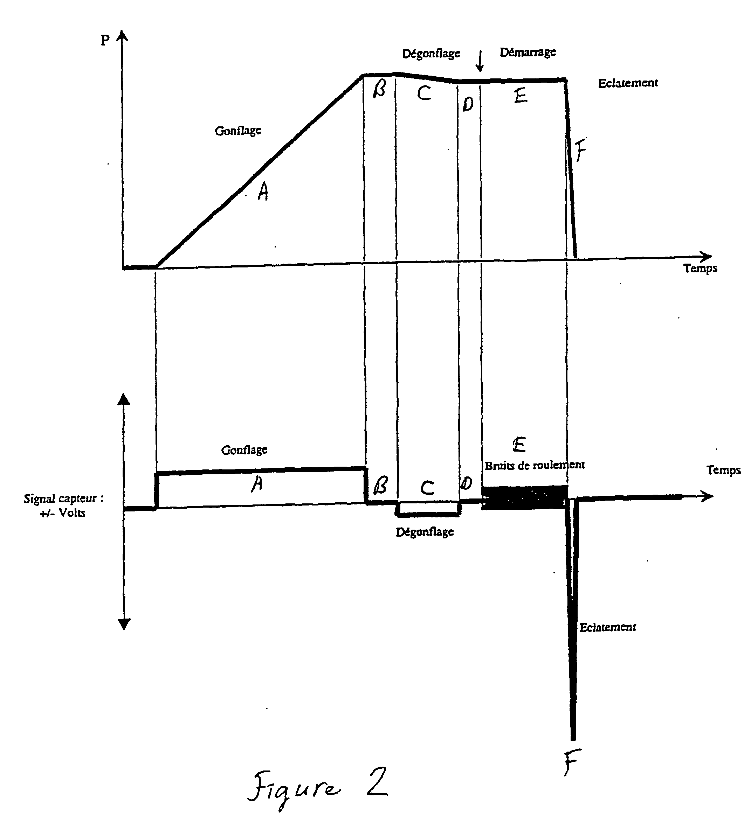

La figure 2 illustre des exemples de signaux susceptibles d'être générés par un détecteur de variation de pression 2 selon l'invention. La figure met en relation la phénomène physique présent et le signal correspondant du détecteur. Par exemple, en mode gonflage A, la pression augmente, donc varie. Cela occasionne la génération d'un signal par exemple positif et constant associé à une variation de pression faible, continue et régulière.

A pression constante, en B et D, aucun signal n'est généré puisque la membrane demeure fixe et ne change pas de profil.

Lors d'une diminution de pression, en C, un signal par exemple négatif et constant peut être associé à une faible diminution de pression, constante et régulière.

En F, le pneumatique éclate, ou subit une perte de pression très importante et rapide, permettant la génération d'un signal sous forme de « pointe », de faible durée, puisque la membrane du capteur est fortement déformée pendant un temps très court, le temps de passer d'un premier profil sensiblement stabilisé vers un autre profil sensiblement stabilisé.

En E, la pression est stable et le véhicule se déplace. Le bruit de roulement peut être perçu par le détecteur, selon sa sensibilité. Il fonctionne alors comme un microphone. La double fonction détecteur de variation de pression / détecteur de bruit de roulement est particulièrement avantageuse. Par exemple, cette double fonction permet d'associer à un signal d'avertissement un mode roulement ou arrêt. Le signal peut alors être traité différemment, le premier de ces deux cas étant plus critique.

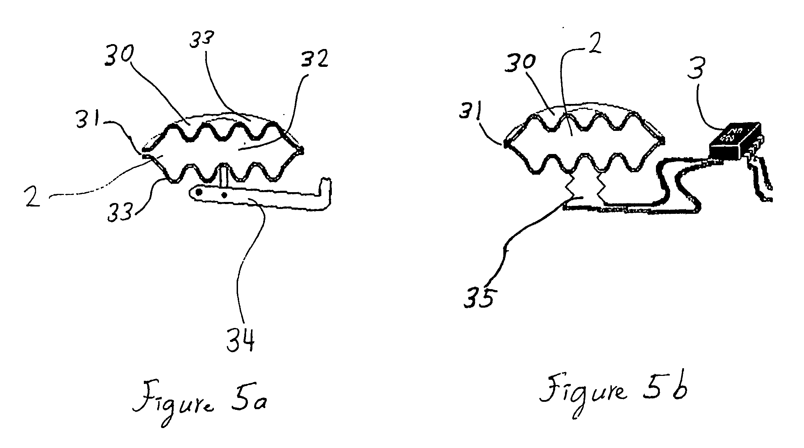

Les figures 5a et 5b illustrent un autre type de détecteur de variation de pression 2, comportant une capsule anéroïde 30. Ladite capsule peut être constituée de deux faces 33 en forme de coquille, jointes sur leurs bords respectifs afin de former un boîtier fermé et sensiblement hermétique. Une ouverture calibrée 31, comme par exemple un tube capillaire, est prévue, soit à la jonction des faces ou encore ailleurs sur la capsule. La forme de la capsule peut varier, sans sortir du cadre de la présente invention.

La capsule 30 est agencée de façon à actionner un organe permettant de transformer l'information liée à la déformation de la capsule, en information correspondant par exemple à une information de perte de pression à un niveau dangereux, ou d'éclatement, etc. A cette fin, la capsule peut actionner soit un organe mécanique 34, tel un levier, un bras ou autre, un organe électrique ou électronique 35, tel une résistance variable, ou un organe électromécanique, tel un interrupteur. L'organe en question est avantageusement relié à un module de gestion 3, qui reçoit et traite le signal de façon appropriée.

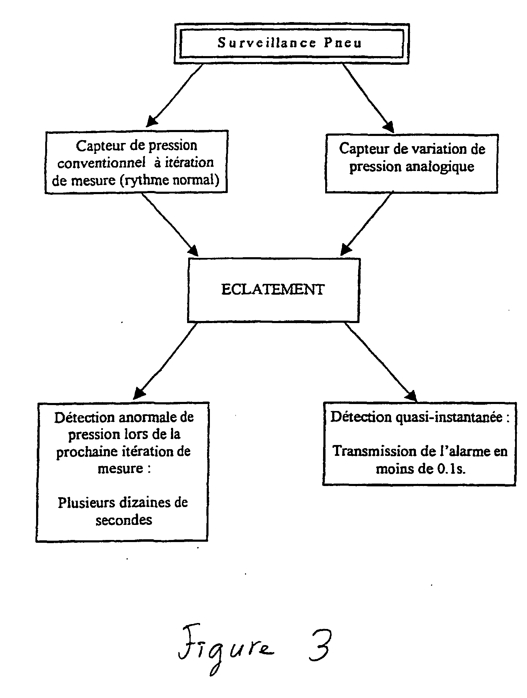

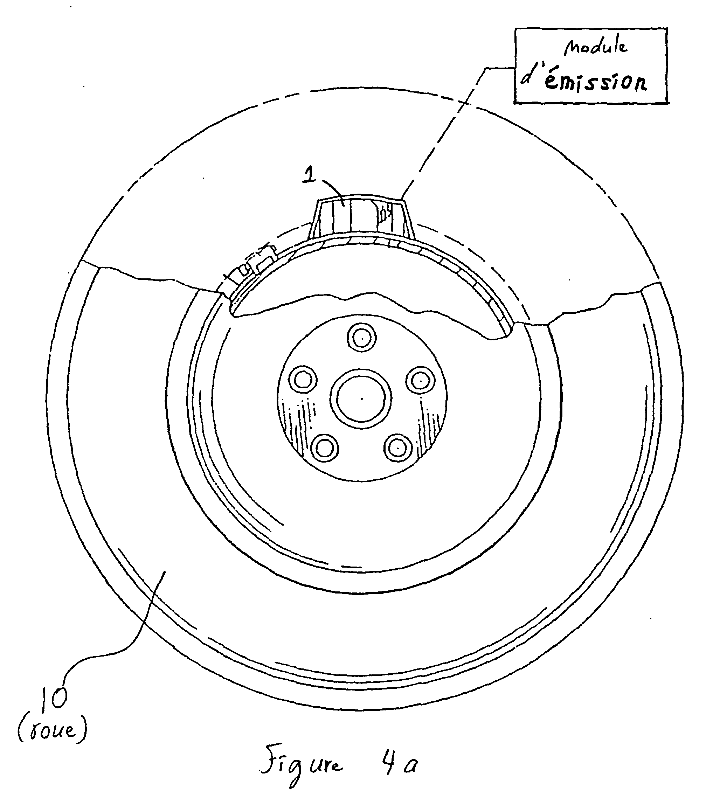

La figure 3 un schéma opératoire de comparaison de deux modes de surveillance de pneumatiques, un premier à l'aide d'un capteur de pression de type connu, l'autre à l'aide d'un détecteur de variation de pression selon l'invention. Dans la premier cas, les mesure sont effectuées par itérations, à des intervalles de temps donnés. Ce type de fonctionnement permet notamment d'économiser la pile. En cas d'éclatement ou de tout autre type de perte de pression subite et rapide du pneumatique, le processus d'itérations se poursuit. La mesure d'une pression plus faible ne se fera que plusieurs secondes ou minutes plus tard, selon l'intervalle prévu entre les itérations. En réalité, le conducteur aura perçu les conséquences du problème en général avant même que l'information de pression faible ne lui soit communiquée.

Dans l'autre cas, le détecteur surveille de façon continue les évolutions éventuelles de pression du pneumatique. Ainsi, en cas de chute subite de pression, une détection quasi-instantanée est effectuée et transmise. Par exemple, la transmission de l'alarme peut se faire en moins de 0.1 seconde. Dans ce cas, le conducteur peut encore réagir et éviter de se retrouver dans une situation périlleuse.

## Revendications

1. Dispositif de détection de perte de pression sensiblement subite et importante d'un pneumatique comprenant :
• un détecteur de variation de pression, susceptible d'une part de réagir dans un intervalle de temps de sécurité à une variation sensiblement importante et rapide de la pression à l'intérieur de la cavité du pneumatique, et d'autre part d'interagir sur un autre élément coopérant avec ledit détecteur, ledit détecteur de variation de pression comprenant un boîtier muni de deux chambres sensiblement isolées l'une de l'autre et séparées par une membrane déformable, une première chambre étant soumise à une pression de référence, la seconde étant susceptible d'être en communication fluidique avec l'ambiance du milieu dans lequel on souhaite effectuer la surveillance, ladite membrane déformable adoptant un profil donné sensiblement stable en l'absence de variation de différentiel de pression entre les deux chambres, ladite membrane étant adaptée pour se déformer pour passer d'un premier profil à un second profil sous l'action d'une variation de la pression de ladite ambiance ;
• un module de gestion, coopérant avec ledit détecteur et susceptible sur la base de l'information fournie par ce détecteur, d'envoyer un signal suite à l'atteinte d'un seuil donné de variation de pression ;
• **caractérisé en ce que** ladite membrane du détecteur est de type piézo-électrique, et **en ce que** les déformations produites sous l'action de la variation de pression permettent de générer un signal électrique dont l'intensité est en relation avec l'importance de la déformation.

2. Dispositif de détection de perte de pression sensiblement subite et importante d'un pneumatique selon la revendication 1, dans lequel la pression de référence correspond au vide.

3. Dispositif de détection d'éclatement selon l'une des revendications 1 ou 2, dans lequel l'ambiance du milieu dans lequel on souhaite effectuer la surveillance correspond à la pression à l'intérieur de la cavité d'un pneumatique.

4. Dispositif de détection de perte de pression sensiblement subite et importante d'un pneumatique selon l'une des revendications 1 à 3, dans lequel la membrane de type piézo-électrique comporte deux faces métallisées.

5. Dispositif de détection de perte de pression sensiblement subite et importante d'un pneumatique selon l'une des revendications 1 à 4, dans lequel le module de gestion émet un signal susceptible d'activer un moyen d'avertissement pour le conducteur du véhicule.

6. Dispositif de détection de perte de pression sensiblement subite et importante d'un pneumatique selon l'une des revendications 1 à 5, dans lequel le module de gestion émet un signal susceptible de servir de paramètre pour un organe d'assistance à la conduite d'un véhicule.

7. Dispositif de détection de perte de pression sensiblement subite et importante d'un pneumatique selon la revendication 6, dans lequel ledit organe d'assistance est un dispositif de type ESP.

8. Dispositif de détection de perte de pression sensiblement subite et importante d'un pneumatique, selon la revendication 6, dans lequel ledit organe d'assistance est un dispositif de type anti-blocage des freins (ABS).

9. Dispositif de détection de perte de pression sensiblement subite et importante d'un pneumatique selon la revendication 6, dans lequel ledit organe d'assistance est un dispositif de type anti-patinage.

10. Pneumatique comportant un dispositif de détection d'éclatement selon l'une des revendications 1 à 9.

11. Pneumatique selon la revendication 10, dans lequel le dispositif de détection d'éclatement est moulé dans une paroi.

12. Jante comportant un dispositif de détection d'éclatement selon l'une des revendications 1 à 9.

13. Dispositif de surveillance de la pression d'au moins un pneumatique, comprenant un capteur de pression, et un dispositif de détection de perte de pression sensiblement subite et importante d'un pneumatique selon l'une des revendications 1 à 9.

## Patentansprüche

1. Vorrichtung zur Erfassung eines im wesentlichen plötzlichen und starken Druckverlusts eines Luftreifens, die aufweist:
• einen Druckveränderungsdetektor, der in der Lage ist, einerseits in einem Sicherheitszeitraum auf eine im wesentlichen starke und schnelle Veränderung des Drucks im Inneren des Hohlraums des Luftreifens zu reagieren, und andererseits mit einem anderen, mit diesem Detektor zusammenwirkenden Element in Wechselwirkung zu treten, wobei der Druckveränderungsdetektor ein Gehäuse aufweist, das mit zwei im wesentlichen voneinander isolierten und durch eine verformbare Membran voneinander getrennten Kammern versehen ist, wobei eine erste Kammer unter einem Bezugsdruck steht, während die zweite Kammer mit dem Umfeld des Mediums in Flüssigkeitsverbindung stehen kann, in dem man die Überwachung durchführen möchte, wobei die verformbare Membran in Abwesenheit einer Veränderung des Druckdifferentials zwischen den beiden Kammern ein im wesentlichen stabiles gegebenes Profil annimmt, wobei die Membran geeignet ist, sich zu verformen, um unter der Wirkung einer Druckveränderung im Umfeld von einem ersten Profil zu einem zweiten Profil überzugehen;
• einen Verwaltungsmodul, der mit dem Detektor zusammenwirkt und in der Lage ist, auf der Basis der von diesem Detektor gelieferten Information nach Erreichen eines gegebenen Schwellwerts der Druckveränderung ein elektrisches Signal zu senden;
• **dadurch gekennzeichnet, dass** die Membran des Detektors vom piezoelektrischen Typ ist, und dass die unter der Wirkung der Druckveränderung hervorgerufenen Verformungen es ermöglichen, ein elektrisches Signal zu erzeugen, dessen Stärke mit der Größe der Verformung in Verbindung steht.

2. Vorrichtung zur Erfassung eines im wesentlichen plötzlichen und starken Druckverlusts eines Luftreifens nach Anspruch 1, bei der der Bezugsdruck dem Vakuum entspricht.

3. Vorrichtung zur Erfassung eines Reifenplatzens nach einem der Ansprüche 1 oder 2, bei der das Umfeld des Mediums, in dem man die Überwachung durchführen möchte, dem Druck im Inneren des Hohlraums eines Luftreifens entspricht.

4. Vorrichtung zur Erfassung eines im wesentlichen plötzlichen und starken Druckverlusts eines Luftreifens nach einem der Ansprüche 1 bis 3, bei der die Membran vom piezoelektrischen Typ zwei metallisierte Flächen aufweist.

5. Vorrichtung zur Erfassung eines im wesentlichen plötzlichen und starken Druckverlusts eines Luftreifens nach einem der Ansprüche 1 bis 4, bei der der Verwaltungsmodul ein Signal sendet, das in der Lage ist, eine Warneinrichtung für den Fahrzeuglenker zu aktivieren.

6. Vorrichtung zur Erfassung eines im wesentlichen plötzlichen und starken Druckverlusts eines Luftreifens nach einem der Ansprüche 1 bis 5, bei der der Verwaltungsmodul ein Signal sendet, das in der Lage ist, als Parameter für ein Lenkhilfeorgan eines Fahrzeugs zu dienen.

7. Vorrichtung zur Erfassung eines im wesentlichen plötzlichen und starken Druckverlusts eines Luftreifens nach Anspruch 6, bei der das Hilfsorgan eine Vorrichtung vom Typ ESP ist.

8. Vorrichtung zur Erfassung eines im wesentlichen plötzlichen und starken Druckverlusts eines Luftreifens nach Anspruch 6, bei der das Hilfsorgan eine Vorrichtung vom Typ Antiblockiervor richtung der Bremsen (ABS) ist.

9. Vorrichtung zur Erfassung eines im wesentlichen plötzlichen und starken Druckverlusts eines Luftreifens nach Anspruch 6, bei der das Hilfsorgan eine Vorrichtung vom Typ Gleit- und Schleuderschutzeinrichtung ist.

10. Luftreifen, der eine Vorrichtung zur Erfassung eines Reifenplatzens nach einem der Ansprüche 1 bis 9 aufweist.

11. Luftreifen nach Anspruch 10, bei dem die Vorrichtung zur Erfassung eines Reifenplatzens in einer Wand geformt ist.

12. Felge, die eine Vorrichtung zur Erfassung eines Reifenplatzens nach einem der Ansprüche 1 bis 9 aufweist.

13. Vorrichtung zur Überwachung des Drucks mindestens eines Luftreifens, die einen Druckmessfühler und eine Vorrichtung zur Erfassung eines im wesentlichen plötzlichen und starken Druckverlusts eines Luftreifens nach einem der Ansprüche 1 bis 9 aufweist.

## Claims

1. A device for detecting substantially sudden and considerable loss of tyre pressure, comprising :
• a pressure change detector, capable on the one hand of responding in a safety interval to a substantially considerable and rapid change in the pressure inside the cavity of the tyre, and on the other hand of acting on another element cooperating with said detector, said pressure change detector comprising a casing provided with two chambers, insulated substantially from one another and separated by a deformable membrane, a first chamber being subject to a reference pressure and the second being capable of being in fluid communication with the environment of the medium in which it is desired to effect monitoring, said deformable membrane adopting a given substantially stable profile in the absence of a change in the pressure differential between the two chambers, said membrane being adapted to deform so as to pass from a first profile to a second profile under the action of a change in the pressure of said environment;
• a management module, cooperating with said detector and capable, on the basis of the information supplied by said detector, of sending a signal following the attainment of a given pressure change threshold;
• **characterised in that** said membrane of the detector is of the piezoelectric type and **in that** the deformations produced under the action of the pressure change allow the generation of an electrical signal, the strength of which is related to the degree of deformation.

2. A device for detecting substantially sudden and considerable loss of tyre pressure according to claim 1, in which the reference pressure corresponds to a vacuum.

3. A blow-out detection device according to one of claims 1 or 2, in which the environment of the medium in which it is desired to effect monitoring corresponds to the pressure inside the cavity of a tyre.

4. A device for detecting substantially sudden and considerable loss of tyre pressure according to one of claims 1 to 3, in which the piezoelectric type membrane comprises two metallised faces.

5. A device for detecting substantially sudden and considerable loss of tyre pressure according to one of claims 1 to 4, in which the management module emits a signal capable of actuating a warning means for the driver of the vehicle.

6. A device for detecting substantially sudden and considerable loss of tyre pressure according to one of claims 1 to 5, in which the management module emits a signal capable of serving as a parameter for a vehicle driver assistance device.

7. A device for detecting substantially sudden and considerable loss of tyre pressure according to claim 6, in which said assistance device is a device of the ESP type.

8. A device for detecting substantially sudden and considerable loss of tyre pressure according to claim 6, in which said assistance device is a device of the antilock brake system (ABS) type.

9. A device for detecting substantially sudden and considerable loss of tyre pressure according to claim 6, in which said assistance device is a device of the antiskid type.

10. A tyre comprising a blow-out detection device according to one of claims 1 to 9.

11. A tyre according to claim 10, in which the blow-out detection device is moulded in a wall.

12. A rim a comprising a blow-out detection device according to one of claims 1 to 9.

13. A device for monitoring the pressure of at least one tyre, comprising a pressure sensor, and a device for detecting a substantially sudden and considerable loss of tyre pressure according to one of claims 1 to 9.
